Europäisches Patentamt

European Patent Office

Office européen des brevets

Veröffentlichungsnummer: **0 300 304**
**A2**

# EUROPÄISCHE PATENTANMELDUNG

Anmeldenummer: 88111023.3

Anmeldetag: 11.07.88

Int. Cl.⁴ **C08K 5/54 , C09K 3/10 ,**
**C09J 3/14 , C09D 5/34**

Patentansprüche für folgende Vertragsstaaten:
ES + GR.

Priorität: 20.07.87 DE 3723936

Veröffentlichungstag der Anmeldung:
25.01.89 Patentblatt 89/04

Benannte Vertragsstaaten:
AT BE CH DE ES FR GB GR IT LI LU NL SE

Anmelder: **Henkel Kommanditgesellschaft auf**
**Aktien**
**Postfach 1100 Henkelstrasse 67**
**D-4000 Düsseldorf-Holthausen(DE)**

Erfinder: **Podola, Tore**
**Deusserstrasse 31**
**D-4019 Monheim(DE)**
Erfinder: **Ernst, Wolfgang**
**Bahlenstrasse 142**
**D-4000 Düsseldorf 13(DE)**
Erfinder: **Knop, Franz-Bernhard, Dr.**
**Robert-Koch-Strasse 10**
**D-4019 Monheim(DE)**
Erfinder: **Emmerling, Winfried, Dr.**
**Lärchenweg 6**
**D-4006 Erkrath 2(DE)**

**Verminderung der Blasenbildung bei feuchtigkeitshärtenden Isocyanatgruppen enthaltenden Prepolymeren.**

Verwendung von Trialkoxymercaptoalkylsilan als Zusatz zu Isocyanatprepolymeren als reaktive Komponente enthaltenden Dichtungs- und/oder Beschichtungsmassen und/oder Klebemassen zur Verminderung bzw. Verhinderung der Blasenbildung bei der durch Luftfeuchtigkeit bewirkten Vernetzung in einer Menge von 0,1 bis 0,7 Mol Trialkoxymercaptoalkylsilan auf 1 Mol NCO-Gruppe in der reagierenden Masse.

EP 0 300 304 A2

## "Verminderung der Blasenbilung bei feuchtigkeitshärtenden Isocyanatgruppen enthaltenden Prepolymeren"

Gegenstand der vorliegenden Erfindung ist die Verwendung von Trimethoxymercaptoalkylsilanen zur Reduzierung bzw. Verhinderung von Blasenbildung bei der durch Luftfeuchtigkeit bewirkten Aushärtung (Vernetzung) von Isocyanatgruppen enthaltenden Prepolymeren.

Isocyanatendgruppen enthaltende Prepolymere werden wegen ihrer Fähigkeit über die Luftfeuchtigkeit in den vernetzten Zustand überzugehen seit längerer Zeit zur Herstellung von Dichtungsstoffen, Überzügen und Klebmitteln verwendet. Hier stört jedoch häufig die Bildung von kleineren oder auch größeren Blasen aus Kohlendioxid, welche bei der Reaktion einer Isocyanatgruppe mit Wasser gebildet wird. Man hat zur Verhinderung dieses Nachteils schon versucht, die endständige Isocyanatgruppen enthaltende Polyester oder Polyether vorher mit sogenannten Maskierungsmitteln für die Isocyanatgruppe umzusetzen. Dies führt jedoch häufig zu einer zu stark verlängerten Aushärtungszeit der mit diesen Prepolymeren hergestellten an der Luft härtenden Überzüge, Dichtstoffe oder Klebmittel. Eine dieser Möglichkeiten ist in der US-Patentschrift A 3 627 722 beschrieben. Dabei werden Diisocyanatgruppen durch Reaktion mit einem Trimethoxymercaptoalkylsilan in die entsprechenden Trimethoxysilan-terminierten Derivate überführt. Dies bringt jedoch den Nachteil mit sich, daß man - wie bereits vorher erwähnt - eine stark verlängerte Reaktionszeit bei der Vernetzung bzw. Aushärtung in Kauf nehmen muß. Um diese herunterzusetzen, wird in der DE- OS 25 51 275 vorgeschlagen, derartige reaktive Prepolymeren enthaltenden Dichtungsmitteln noch bestimmte Mengen von N-substituiertem Aminopropyltrimethoxysilan zuzufügen.

Da die genannte Lösungsmöglichkeit für die Praxis relativ aufwendig ist, bestand die Aufgabe der vorliegenden Erfindung darin, einen Weg aufzuzeigen, - unter Erhalt der guten Reaktionsfähigkeit der endständigen Isocyanatgruppen - die bei Feuchtigkeitszutritt erfolgende Bildung von Bläschen weitgehend zu vermindern.

Überraschenderweise hat sich gezeigt, daß man durch den Zusatz von Trimethoxymercaptoalkylsilan zu Isocyanatgruppen aufweisenden Prepolymeren, welche als Dichtungs- und/oder Beschichtungsmassen und/oder als Klebmittel verwendbar sind, die Bildung von Blasen bei der Vernetzungsreaktion reduzieren bzw. praktisch vollständig verhindern kann. Es ist also somit nicht mehr notwendig, die Isocyanatgruppen durch Umsetzung mit einem Trimethoxymercaptoalkylsilan vollständig in die entsprechenden Siliciumverbindungen zu überführen, welche für die Vernetzung bzw. Härtung dann wiederum durch weitere Zusätze beschleunigt werden müssten.

Es hat sich herausgestellt, daß es im Regelfall völlig ausreichend ist, wenn pro Mol Isocyanat-Gruppe 0,3 bis 0,4 Mol Trialkoxymercaptopropylsilan verwendet werden. Im unteren Bereich des Zusatzes, d.h. um 0,3 Mol wird nur noch eine ganz geringfügige Bildung von Bläschen beobachtet. Diese ist meist nicht direkt erkennbar, sondern nur nach Aufschneiden der Dichtungs- oder Überzugsmasse zu beobachten. Im Bereich um 0,4 Mol finden sich dagegen höchstens noch bei optischer Vergrößerung erkennbare Mikrobläschen. Dies äußert sich außerdem in der relativen Volumenzunahme, die derartige Dichtstoffe bei der Aushärtungsreaktion erfahren. Sie liegt im erfindungs- gemäßen Bereich deutlich unter 2 Vol.-% und sinkt bei höheren Zusätzen, d.h. ab 0,3 Mol Trialkoxymercaptoalkylsilan pro Mol Isocyanatgruppe und mehr auf Werte gleich oder kleiner als 0,3 Vol.-% ab.

Werden andersartige, aber ebenfalls feuchtigkeitsvernetzende Isocyanat-Prepolymere verwendet, so kann sich die notwendige Silan-Zusatzmenge nach oben oder unter verschieben. Mittels Zugaben im Bereich zwischen 0,1 bis 0,7 Mol werden in der Regel meist befriedigende bis sehr gute Ergebnisse erzielt.

Wie eingangs bereits erwähnt, sind Isocyanatendgruppen enthaltende Prepolymere wegen ihrer Fähigkeit an der Luft in den vernetzten Zustand überzugehen seit längerem zur Herstellung von Überzugsmitteln und Dichtstoffen und dergleichen bekannt. Sie basieren auf Prepolymeren auf Basis von di- und trifunktionellen Polyetherpolyolen wie sie durch Polyaddition von Alkylenoxiden wie insbesondere Ethylenoxid und/oder Propylenoxid an zweiwertige Alkohole wie Glykol (Ethylenglykol), Propylenglykol und Butandiol-1,4 erhalten werden können. Auch ist es möglich, durch Ringöffnungspolymerisation von Tetrahydrofuran entsprechende 1,4-Ether des Butandiols herzustellen. Neben den sehr häufig verwendeten Polyethern können in bekannter Weise auch wenigstens zwei Hydroxylgruppen enthaltende Polyester, welche Veresterungsprodukte der erwähnten Glykole oder des Diethylenglykols, Propylenglykols mit Dicarbonsäuren wie Adipinsäure, Sebacinsäure, Terephthalsäure und Phthalsäure beziehungsweise deren Anhydriden eingesetzt werden. Auch derartige Polyester sind in der Technik allgemein üblich und bekannt als Ausgangsmaterial für die Herstellung von Isocyanatprepolymeren. Die Molekülmasse der Ausgangsmaterialien soll im Mittel zwischen etwa 250 bis 10 000, vorzugsweise aber zwischen 500 und 3000 liegen. Bei der Herstellung der nur überwiegend linear aufgebauten Isocyanatendgruppen enthaltenden Prepolymeren werden geringere Mengen an mehr als bifunktionellen Polyolen eingesetzt. Daraus resultiert in bekannter Weise eine dreidimensionale Struktur des Makromoleküls bei der Vernetzungsreaktion. Diese ist zur Einstellung bestimmter elastischer Eigenschaften häufig erwünscht.

Die vorgenannten OH-Gruppen aufweisenden Ausgangsmaterialien werden mit handelsüblichen Diisocyanaten in einem solchen Molverhältnis von NCO-Gruppen zu Hydroxylgruppen umgesetzt, daß ein Überschuß von Isocyanatgruppen resultiert. Geeignete Disocyanate sind beispielsweise die isomeren Toluylendiisocyanate, insbesondere die technischen Gemische des 2,4 und 2,6-Isomeren, ferner Diphenylmethandiisocyanat, 1,6-Hexamethylendiisocyanat, Naphthylendiisocyanat, Isophorondiisocyanat (2,4,4-Trimethyl-1,6-diisocyanato-hexan) und dimeres Toluylenisocyanat. Die so erhaltenen Prepolymeren sollen ein Gehalt von etwa 1 bis 4 Gewichtsprozent Isocyanatgruppen aufweisen.

Besonders bevorzugt ist die Verwendung eines Prepolymeren auf Basis von di- und trifunktionellen Polyetherpolyolen. Man kann in diesem Fall einen zwei Hydroxylgruppen enthaltenden Polyether und/oder Polyester der vorstehend geschilderten Art mit einer Molmasse zwischen etwa 500 und 5000 mit einem Diisocyanat in Gegenwart einer mehr als bifunktionellen niedermolekularen Hydroxylverbindung so weit umsetzen, daß ein Isocyanatgehalt von etwa 1,5 bis 3,5 Gewichtsprozent resultiert. Dabei werden technisch besonders günstige ausgehärtete Massen mit guten elastischen Eigenschaften erhalten.

Es hat sich ferner als günstig erwiesen, diesen über Isocyanatgruppen aushärtbaren Massen noch handelsübliche Polymere oder Copolymere des Vinylchlorids in Pulverform, zuzusetzen. Die geeigneten PVC-Sorten sollen einen K-Wert zwischen etwa 45 und 80 aufweisen.

Im allgemeinen ist es notwendig bei der Herstellung von bei Luftfeuchtigkeit aushärtenden Dichtungsmassen auch Weichmacher für das PVC mitzuverwenden. Hier handelt es sich in erster Linie um Alkylsulfonsäurearylester und/oder um Phthalsäuredialkylester. Aber auch rein aliphatische Dicarbonsäureester wie z.B. der Octyl- oder Isodecylester der Adipinsäure können eingesetzt werden. Schließlich ist an die Verwendung von sogenannnten Polymerweichmachern (Polyester aus Adipin-, Sebacin-, Acelain-und Phthalsäure mit Diolen wie Propan-, Butan- oder Hexandiol mit einem Molgewicht von etwa 1000 bis 5000) zu denken. Unter gewissen Umständen ist es auch günstig, sogenannte Epoxidweichmacher, die durch Epoxidieren von bestimmten Fettderivaten erhalten werden können, einzusetzen beziehungsweise mitzuverwenden.

Als Füllstoffe können den Dichtungsmassen in bekannter Weise Alumosilikate wie Ton oder Feldspat, ferner gemahlener Dolomit, Calciumcarbonat, Calciumsulfat, Calciumoxid, Zinkoxid, Titandioxid und dergleichen zugesetzt werden. Als Pigmente eignen sich neben dem erwähnten Titandioxid insbesondere Eisenoxid, Ruß und Chromoxidverbindungen.

Um die Fließeigenschaften der Dichtungsmittel günstig zu beeinflußen, können auch chlorierte Kohlenwasserstoffe mitverwendet werden.

Zur Herstellung der erfindungsgemäß erhältlichen Dichtungsmittel beziehungsweise Überzugsmittel mischt man zweckmäßig bei leicht erhöhten Temperaturen zwischen etwa 30 bis 50 °C die Komponenten unter Ausschluß von Feuchtigkeit in einem entsprechenden Mischgerät, insbesondere einem Kneter. Vor dem Abfüllen sollten die Produkte durch Verminderung des Drucks beispielsweise bis zu 20 mbar entgast werden.

Unter den erfindungsgemäß einzusetzenden Trialkoxymercaptoalkylsilanen hat sich das Trimethoxymercaptopropylsilan besonders bewährt. Da es auch für andere Zwecke in der Technik verwendet wird, steht es als Handelsprodukt zur Verfügung. Selbstverständlich können andere Trialkoxymercaptoalkylsilane eingesetzt oder verwendet werden, sofern sie sich in der Kohlenstoffatomanzahl nicht zu stark vom bevorzugten Alkoxymercaptosilan unterscheiden und diese Silane gegebenenfalls in technisch ausreichendem Maß zur Verfügung stehen.

## Beispiele

Es wurden Fugendichtungsmassen unter wasserfreien Bedingungen hergestellt, wobei die einzelnen Komponenten in der in der Tabelle angegebenen Reihenfolge miteinander vermischt wurden. Die Temperaturen lagen zwischen 25 bis 45 °C. Die fertige Zusammensetzung wurde nach der Herstellung noch 10 Minuten bei einem Druck von 15 mbar bei 45 °C gehalten.

Das Prepolymere wurde aus Polypropylenglykol (Mol-Gewicht 2000) mit einem Zusatz von 10 Gew.-% Trimethylolpropan und einer solchen Menge an Diphenylmethandiisocyanat hergestellt, so daß ein NCO-Gehalt von 2,6 Gew.-% resultierte. Als Weichmacher wurde eine Alkyl(12/18)sulfonsäurephenolester (gemäß DIN 7723) eingesetzt und das PVC-Pulver war ein Emulsionspolymerisat mit dem K-Wert 73. Das Titandioxid war wie das Xylol völlig wasserfrei und beim Katalysator handelte es sich um Dibutyl-Sn-dilaurat. Die wirksame Mercaptosilanverbindung war handelsübliches Trimethoxmercaptopropylsilan.

Mit der Fugendichtmasse wurden auf Probekörpern aus Merantiholz Fugen ausgefüllt und bei 23°C und 50 % rel. Luftfeuchtigkeit während 6 Wochen gelagert. Es erfolgte eine subjektive visuelle Prüfung, wobei folgende Kriterien angewendet wurden:

A: sehr starke Aufwölbung

B: starke Aufwölbung

C: einzelne starke Blasen

D: kleine Blasen

E: kleine Bläschen, sporadisch, nur an der Grenzschicht Fugendichtungsmasse Holz

Zur objektiven Prüfung wurde die meßbare Volumenzunahme bei der Vernetzung (Aushärtung) der Masse herangezogen. Die Volumenbestimmung erfolgte durch Messung des durch den Prüfkörper verdrängten Wassers. Dazu wurden nach Aushärtung zur Vermeidung von Wasseraufnahme während des Tauchmeßverfahrens die Merantiteile mit Klarlack (handelsüblicher Nitrolack) lackiert, um offene Poren im Holz zu schließen. Darüber hinaus wurde der Dichtstoff lackiert, um offene Blasen zu schließen.

In der nachfolgenden Tabelle sind die Zusammensetzungen der Massen und die Resultate der visuellen und gemessenen Beobachtungen in % Volumenzunahme wiedergegeben. Die prozentuale Volumenzunahme wurde durch gemeinsames Tauchen von jeweils 10 Probekörpern in Wasser gemessen.

Tabelle

| Bestandteil in g | Beispiel Nr. | | |
|---|---|---|---|
| | 1 | 2 | 3 |
| Prepolymer | 1650 | 1650 | 1650 |
| Weichmacher | 1350 | 1350 | 1350 |
| PVC-Pulver | 1250 | 1250 | 1250 |
| Kalk,gebrannt | 200 | 200 | 200 |
| Titandioxid | 250 | 250 | 250 |
| Katalysator | 0,5 | 0,5 | 0,5 |
| Xylol | 259,5 | 239,5 | 219,5 |
| Mercaptosilan | 40,0 | 60,0 | 80,0 |
| visuell: | C | D | E |
| % Vol.-Zunahme | 1,85 | 0,31 | 0,31 |

Vergleichsversuche

A) Ohne Zusatz von Trimethoxymercaptopropylsilan wurde bei sehr starker Aufwölbung eine Volumenzunahme von 4,94 % gemessen und bei

B) mit 20 g Trimethoxymercaptosilan wurde bei starker Aufwölbung eine Volumenzunahme von 3,40 % beobachtet.

**Ansprüche**

1) Verwendung von Trialkoxymercaptoalkylsilan als Zusatz zu Isocyanatprepolymeren als reaktive Komponente enthaltenden Dichtungs- und/oder Beschichtungsmassen und/oder Klebemassen zur Verminderung bzw. Verhinderung der Blasenbildung bei der durch Luftfeuchtigkeit bewirkten Vernetzung.

2) Verwendung von 0,1 bis 0,7 Mol Trialkoxymercaptoalkylsilan als Zusatz zu Isocyanatprepolymeren enthaltenden Dichtungs-und/oder Beschichtungsmassen und/oder Klebemassen nach Anspruch 1, wobei die Molangaben auf 1 Mol NCO-Gruppe in der Dichtungs- und/oder Beschichtungsmasse bezogen ist.

3) Verfahren zur Verminderung bzw. Verhinderung der Blasenbildung in Isocyanatprepolymeren als reaktive Komponente enthaltenden Dichtungs- und oder Beschichtungsmassen und oder Klebemassen, dadurch gekennzeichnet, daß man, bezogen auf 1 Mol NCO-Gruppe, 0,1 bis 0,7 Mol Trimethoxymercaptopropylsilan bei der Herstellung der Masse einarbeitet.

Patentansprüche für folgende Vertragsstaaten : GR, ES

1) Verfahren zur Herstellung von Isocyanatprepolymeren als reaktive Komponente enthaltenden Dichtungs- und/oder Beschichtungsmassen und/oder Klebemassen, dadurch gekennzeichnet, daß zur Verminderung bzw. Verhinderung der Blasenbildung bei der durch Luftfeuchtigkeit bewirkten Vernetzung auf 1 Mol NCO-Gruppen in den Prepolymeren 0,1 bis 0,7 Mol Trialkoxymercaptoalkylsilan zugesetzt wird.

2) Verfahren zur Verminderung bzw. Verhinderung der Blasenbildung in Isocyanatprepolymeren als reaktive Komponente enthaltenden Dichtungs- und/oder Beschichtungsmassen und/oder Klebemassen nach Anspruch 1, dadurch gekennzeichnet, daß man etwa gleiche Mengen Weichmacher und PVC-Pulver mit dem 1,5 bis 3,5 % Isocyanantgruppen enthaltenden Prepoymeren und dem Trialkoxymercaptoalkylsilan unter Ausschluß von Feuchtigkeit in einem Kessel solange mischt, bis eine homogene Masse entstanden ist.